(19) Europäisches Patentamt
European Patent Office
Office européen des brevets

(11) Publication number: **0 494 663 A2**

# (12) EUROPEAN PATENT APPLICATION

(21) Application number: **92100256.4**

(51) Int. Cl.[5]: **C08K 5/01**, F16F 7/00

(22) Date of filing: **09.01.92**

(30) Priority: **10.01.91 JP 44527/91**
**21.02.91 JP 78692/91**
**01.04.91 JP 92656/91**
**01.04.91 JP 92657/91**
**01.04.91 JP 92658/91**
**01.04.91 JP 92659/91**
**09.08.91 JP 223555/91**
**23.08.91 JP 235639/91**

(43) Date of publication of application:
**15.07.92 Bulletin 92/29**

(84) Designated Contracting States:
**DE FR GB IT NL**

(71) Applicant: **Tosoh Corporation**
**4560, Kaisei-cho**
**Shinnanyo-shi, Yamaguchi-ken(JP)**

(72) Inventor: **Higashiyama, Kazuyasu**
**2273-1, Ikuwa-cho**
**Yokkaichi-shi, Mie-ken(JP)**
Inventor: **Furukawa, Hiroaki**
**5-7, Betsumei 3-chome**
**Yokkaichi-shi, Mie-ken(JP)**

(74) Representative: **Vossius & Partner**
**Siebertstrasse 4 P.O. Box 86 07 67**
**W-8000 München 86(DE)**

## (54) Thermoplastic resin composition.

(57) A thermoplastic resin composition or a synthetic rubber composition containing 5 to 100 parts by weight of at least one condensed polycyclic compound consisting of not less than three rings and/or of at least one ring assemblage consisting of not less than three ring systems per 100 parts by weight of thermoplastic resin or synthetic rubber is disclosed, which can be used as an absorber of vibration energy.

EP 0 494 663 A2

The present invention relates to a thermoplastic resin composition and a synthetic rubber composition excellent in the absorption performance of vibration energy, which is used for the purposes of increased velocity of acturating reaction or increased accuracy of measurement and improved tone quality by controlling the vibration in the fields of various transport instruments, precision electronic instruments and acoustic instruments.

So far, as an absorber of vibration energy, butyl rubber has been most often used. Also, recently, it has been found that polynorbornene and special urethane-based elastomers have higher performance, attracting attention.

The primary evaluation of these vibration energy absorbers is made through the storage modulus (E') and the loss factor (tan $\delta$ = loss modulus (E'')/storage modulus (E')) determinable from the viscoelastic measurement of those materials.

For designing as the vibration energy absorber, the higher the loss factor, the better, and, for the storage modulus, optimal value exists depending on the forms used.

These two factors have ordinarily high temperature-dependency. That is, the storage modulus gradually decreases as the temperature rises and abruptly decreases usually in the temperature region exceeding the glass transition point. Moreover, the loss factor shows the highest value in the temperature region exceeding the glass transition point, but generally tends to decrease in the temperature regions before and after it.

A criterion required for such vibration energy absorbers, therefore, has been the fact that the materials have a high loss factor in the temperature region where they are used.

On the other hand, with respect to the storage modulus, it has been possible to match with the optimal value, since the value can be adjusted over considerable latitude by adding inorganic or metallic fillers, softeners or rubbers.

For this reason, butyl rubber, polynorbornene and special urethane-based elastomer show excellent values of loss factor; tan $\delta$ = 1.4, 2.8 and 1.3, respectively, at maximum. These materials, however, have difficulty in the processibility and the moldability, leading to a limited use range.

On the other hand, the thermoplastic resins, as classified according to the behavior of the resin on heating, occupy the most extensive part of plastics. When attempting to use a thermoplastic resin as a vibration energy absorber, a high value of the loss factor appears in the glass transition region originating from the micro Brownian motion which occurs in the amorphous region of resin, and so this region is commonly used. On the other hand, the temperature range for using materials is usually at and around the room temperature. Despite, with almost all of the thermoplastic resins alone, the glass transition range is located in a temperature region higher than room temperature. Moreover, since polypropylenes, for example, having the glass transition range near room temperature are crystalline resins, they have less amorphous area, resulting in a lower value of loss factor in the glass transition region compared with amorphous resins.

For this reason, it is required for most thermoplastic resins to shift the glass transition region to the lower temperature side by using additives such as plasticizer.

A thermoplastic resin with which such method has been established is poly(vinyl chloride). The loss factor of poly(vinyl chloride) alone has a peak value of about 1.1 before and after 90 °C. However, if adding 70 parts by weight of di-2-ethylhexyl phthalate (DOP) being a typical plasticizer to 100 parts by weight of resin, the peak temperature of loss factor becomes about 20 °C and the peak value also decreases to as low as about 0.6.

Applying similar procedure also to other resins, the loss factor tends to decrease, hence a method for increasing the loss factor of thermoplastic resins is desired.

On the other hand, when using synthetic rubber as a vibration energy absorber, above-mentioned butyl rubber is widely used in general. Recently, however, synthetic rubber having higher absorption performance of vibration energy is sought accompanying with the higher performance of precision instruments and transport instruments being application fields thereof.

The object of the invention is to provide a thermoplastic resin composition or a synthetic rubber composition with excellent absorption performance of vibration energy while retaining the special features of a thermoplastic resin or a synthetic rubber.

The invention relates to a thermoplastic resin composition or a synthetic rubber composition containing 5 to 100 parts by weight of at least one condensed polycyclic compound consisting of not less than three rings and/or of at least one ring assemblage consisting of not less than three ring systems per 100 parts by weight of thermoplastic resin or synthetic rubber. Furthermore, the invention relates to an absorber of vibration energy comprising these compositions.

In the following, the details will be illustrated.

The thermoplastic resins which may be used in the invention designate overall resins having such a property that, even if removing the external force after allowed to soften by heating and deform the external appearance would be retained. For example, polyolefines represented by polyethylene and polypropylene, acrylic resin, styrenic resin, poly(vinyl fluoride), poly(vinyl alcohol), poly(ethylene terephthalate), polyamide, polyacetal, polycarbonate, modified poly(phenylene oxide), poly(butylene terephthalate), polysulfone, poly-(ether sulfone), poly(arylene sulfide) represented by poly(phenylene sulfide), polyarylate, polyamidoimide, poly(ether imide), poly(ether ketone), polyimide, liquid crystalline polyester, polytetrafluoroethylene, poly-(vinylidene chloride) and thermoplastic polyurethane can be mentioned which may be used alone or as mixtures of two or more types.

Explaining the thermoplastic resins in more detail, for example, the styrenic resins to be used in the invention include homopolymer of styrene , copolymers of styrene with synthetic rubber and copolymer of styrene with other monomer(s). For example, as the synthetic rubbers, butadiene-styrene rubber (SBR) and isoprene-styrene block copolymer (SIS) are mentioned and, as the copolymers with other monomers, styrene-acrylonitrile copolymer (AS resin or SAN), styrene-methyl-methacrylate copolymer and acrylonitrile-butadiene-styrene copolymer (ABS) are mentioned which may be used alone or as mixtures of two or more types.

The poly(arylene sulfide) resins which may be used in the invention are high molecular compounds in which the repeating unit is represented by the general formula (-Ar-S-). Here, as the concrete examples of (-Ar-S-), the following structural units are mentioned.

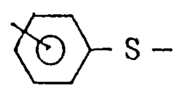 , 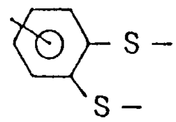 , 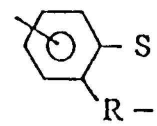

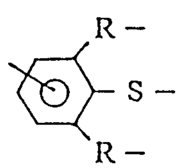 , 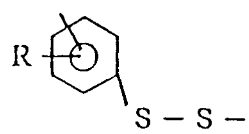 , 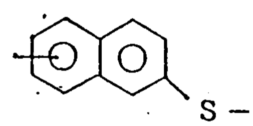

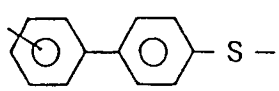 , 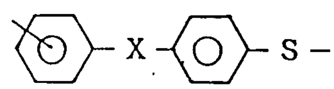

(wherein, R is an alkyl group, phenyl group, nitro group, carboxyl group, nitrilo group, amino group, alkoxyl group, hydroxyl group or sulfonic group and X is a methylene group, ethylene group, isopropyl group, ether group, sulfone group, ketone group, amido group or imino group).

One type or two or more types of such poly(arylene sulfide) resins can be used. Particularly preferable however is poly(phenylene sulfide) resin. Poly(phenylene sulfide) resin may include the copolymers with other components, if they contain not less than 90 mol % structure having repeating unit represented by

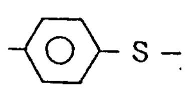

Poly(arylene sulfide) resins are divided into relatively low-molecular weight polymers obtained by production processes disclosed in Japanese Patent Publication No. Sho 44-2761, Japanese Patent Publication No. Sho 45-3368, U.S. Patent 3,274,165 and Japanese Patent Publication No. Sho 46-27255 and substantially linear and relatively high-molecular weight polymers disclosed in Japanese Patent Publication No. Sho 52-12240. The former polymer can also be used after increasing the polymerization degree by

heating in an atmosphere of oxygen or in the presence of crosslinking agents such as peroxide. Moreover, it is also possible to use the polymer modified with amino groups, carboxyl groups, or hydroxyl groups, or after a post-treatment such as treatment with deionized water, treatment with hot water or acid treatment.

The melt viscosity of poly(arylene sulfide)suited for use in the invention is not particularly confined, if being a viscosity capable of giving molded article, but 100 to 30000 poises are preferable. Particularly preferable are 150 to 4500 poises. Here, if under 100 poises, difficulty is caused in the mechanical characteristics and, if over 30000 poises, the molding of resin is difficult, which is unpreferable (This melt viscosity is a value measured at a temperature of 300 °C, a load of 10 kg and a shear rate of 100 $sec^{-1}$ with Koka-type flow tester using a 2 mm long and 0.5 mm inner diameter die).

The acrylic resins which may be used in the invention are resins obtained when acrylic monomers such as acrylic acid, methacrylic acid and their esters are homopolymerized or copolymerized with other monomers. Preferred are compounds having methacrylic groups, that is, $\alpha$-methylacrylic groups, and particularly synthetic resins obtained from methyl methacrylate as a main raw material. While the bulk polymerization, suspension polymerization, emulsion polymerization and solution polymerization are considered as the forms to polymerize methyl methacrylate, there arise no problems in particular with any polymer obtainable by any polymerization process. Moreover, the polymerization degree is not particularly restricted, if being adaptable for use. Preferable are polymers with a melt flow rate (at 230 °C and 3.8 kg, I conditions) of 1 to 30 g/min. Concretely, poly(methyl methacrylate)(PMMA), poly(methyl acrylate)(PMA) and poly(ethyl methacrylate)(PEMA) are mentioned which may be used alone or as mixtures of two or more types.

The polyolefinic resin capable of being used in the invention may be any of polyolefins such as homopolymer of $\alpha$-olefins including ethylene, propylene, 1-butene, 1-hexene, 4-methyl-1-pentene, 3-methyl-1-pentene and 3-methyl-1-butene and copolymers comprising two or more comonomers thereof, further, copolymers of $\alpha$-olefins with other copolymerizable monomers, for example, styrene, acrylonitrile, vinyl chloride, vinyl acetate and (meth)acrylic acid and their derivatives, and, in other way, blends of said polymers with each other or with other thermoplastic resins, block copolymers and graft copolymers. Among these, copolymers with copolymerizable polar monomers such as vinyl acetate are particularly preferable.

The polycarbonates which may be used in the invention are polyesters of carbonic acid with polyvalent alcohols or polyvalent phenols, and, in particular, reaction products of bisphenol A with phosgene obtained by the phosgene process (or solvent process) or polycondensation products obtained by the ester exchange process wherein bisphenol A and diphenyl carbonate are reacted through ester exchange at high temperature under reduced pressure are representative. Moreover, the molecular weight is preferably not less than 20000 in consideration of the use for structural materials.

The polyacetals which may be used in the invention are crystalline thermoplastic resins having a polyether structure in which the main chain of the molecule is constituted by repeating methylene group and oxygen. Moreover, copolymers obtained when ethylene oxide, 1,3-dioxolane and other cyclic ethers are added in the ring cleavage polymerization of trioxane can also be used.

The polyurethanes which may be used in the invention have urethane linkages in the molecule and are produced mainly through the reaction between diisocyanates and polyhydroxy compounds(polyols). For example, as the diisocyanates, tolylene diisocyanate, diphenylmethane-4,4'-diisocyanate and 1,5-naphthalene diisocyanate can be mentioned. Besides, even if polyisocyanates, regenerated products of isocyanate or non-yellowing isocyanates were used, there would be no problems. On the other hand, as the polyhydroxy compounds, polyesters and polyethers having terminal -OH groups are mentioned.

The modified poly(phenylene oxide) which may be used in the invention is a resin obtained from 2,6-xylenol (synthesized from methanol and phenol). Using this as a raw material, poly(phenylene oxide) is prepared by an oxidation polymerization process with amino-copper complex catalyst, and further this may be modified with polystyrene.

The thermoplastic polyesters to be used in the invention are also called saturated polyesters and are straight chain thermoplastic polymers having ester linkages in the main chain, which contain no unsaturated linkages participating in cure in the molecule. They can be synthesized through the polycondensation between dibasic acids and glycols making it possible to produce a variety of saturated polyesters, but, particularly, poly(ethylene terephthalate), poly(butylene terephthalate) and polyarylate (polycondensation product of bisphenol A with phthalic acid) are preferable because of the use for molding materials. The polymerization process is not particularly confined, though the dimethyl terephthalate process and direct polymerization process can be mentioned.

The polyamides which may be used in the invention are high-molecular synthetic resins having acid amide linkages and various types can be produced depending on the types of amido group and organic

acid group. For example, polymerization products from lactams or aminocarboxylic acids under heat and straight chain aliphatic polyamides polycondensed diamines with dicarboxylic acids are representative, and, polyamide 6, polyamide 12, polyamide 11, polyamide 66, polyamide 610 and polyamide 612 are mentioned. Also, there exist amorphous transparent polyamides produced from terephthalic acid and trimethylhexamethylenediamine but the polyamides to be used in the invention are not confined to these.

Among these thermoplastic resins, those containing one or more of nitrogen, oxygen and sulfur atoms and aromatic rings are preferable. The reason therefore is not clear, but it is considered that, since these particular elements or structures increase the polarity, some interactions or other will take place between the thermoplastic resins and additives to be used in the invention to enhance the absorption performance of vibration energy.

On the other hand, since the main part of the improved absorption performance of vibration energy according to the invention is an effect accompanying with the improved loss factor in the glass transition region originating from the micro Brownian motion caused in the amorphous region of resin, higher effect can be achieved with resins belonging to amorphous resins among the thermoplastic resins. However, the thermoplastic resins to be used in the invention are not confined to those described above.

Furthermore, the synthetic rubbers which may be used in the invention are materials having rubber-like elasticity or high-molecular substances being the raw materials thereof. They are linear high-molecules or their crosslinked products having such properties that they are amorphous and the glass transition point is lower than room temperature, or, if being crystalline, the crystallinity is not so high or the melting point is lower than room temperature, and it is possible to carry out crosslinking with an appropriate density. The modes of crosslinking may be physical linkage utilizing intermolecular cohesion and chemical linkage. As the types of the synthetic rubbers, styrene-butadiene rubber, styrene-isoprene rubber, styrene-chloroprene rubber, butadiene rubber, isoprene rubber, ethylene-propylene rubber, butyl rubber, chloroprene rubber, acrylonitrile-butadiene rubber, chlorosulfonated polyethylene, acrylic rubber, urethane rubber, silicone rubber, fluororubber, polysulfide rubber and polyether rubber are mentioned which may be used alone or as mixtures of two or more types.

Explaining the synthetic rubbers in more detail, for example, the nitrile rubber to be used in the invention is a butadiene-acrylonitrile copolymer including the product generally called NBR. These copolymers are hard if the content of acrylonitrile exceeds 60 % and they tend to swell in oil if the content decreases under 7 %. For this reason, copolymers with an acrylonitrile content of 15 to 50 %, which are rubber-like and oil resistant, are preferable. Moreover, the polymerization reaction is conducted through emulsion polymerization and, with respect to the polymerization temperature, cold rubber obtainable at low temperature and hot rubber obtainable at ambient temperature or higher can be used without problems, in particular. Moreover, the Mooney viscosity ($ML_{1+4}$ (100 °C)) being a measure of polymerization degree is preferable to be 20 to 90. Further, copolymers with a third component, for example, copolymers of NBR with small amounts of acrylic monomer such as methacrylic acid (called carboxylated nitrile rubber generally) and terpolymers with vinyl pyridine are also included.

The chloroprene rubber which may be used in the invention includes polymers obtained through the polymerization of chloroprene (2-chloro-1,3-butadiene) obtainable via monovinyl acetylene using acetylene as a raw material or obtainable from trichlorobutane or dichlorobutene using butane or butene as a raw material. The products are generally called CR. As the polymerization processes, bulk polymerization, solution polymerization and emulsion polymerization are mentioned, but all CRs obtained by any process may be used. Moreover, in general, there exist sulfur-modified CR and mercaptan-modified CR depending on the types of polymerization regulator, but there arise no problems particularly for the composition of the invention even if either may be used. Furthermore, the Mooney viscosity ($ML_{1+4}$(100 °C)) of CR to be used in the invention should be in the range of 35 to 140 and the crystallization velocity is not particularly critical.

The chlorosulfonated polyethylene which may be used in the invention indicates a vulcanizable elastomer producible by allowing polyethylene with molecular weight of around 20000 to chemically react with chlorine and sulfur dioxide gas for chlorination and chlorosulfonation. The product is generally called CSM. The existence of chain branching in the polyethylene to be used in this reaction does not particularly arise problems, but, without it, the crystallization degree of the polyethylene becomes high and stiffness appears in the elastomer obtained resulting in difficulties in the processing of the unvulcanized rubber. Also, the chlorination has an effect to eliminate the crystallinity of polyethylene, but too much chlorination affects the properties of the rubber. Hence, elastomers with a chlorine content of 25 to 45 % are preferable. Moreover, the chlorosulfonation is performed for the purpose of introducing vulcanized sites and their amount significantly affects various properties of the vulcanizate. Thus, elastomers with around 1.0 % in terms of sulfur content are preferable from the viewpoint of processibility.

The acrylic rubbers which may be used in the invention are copolymers of acrylic esters with other

monomers obtainable by emulsion polymerization . The acrylic esters include alkyl esters represented by ethyl acrylate and butyl acrylate. On the other hand, as other monomers, those containing active chlorine such as 2-chloroethyl vinyl ether and vinyl chloroacetate and those not containing active chlorine such as allyl glycidyl ether, acrylic acid and acrylonitrile are mentioned. One, two or more of these acrylic esters are copolymerized with one, two or more other monomers . The other monomers are used for the purpose of introducing reactive groups for crosslinking. Hence, the composition ratio in this copolymerization conspicuously affects the physical properties of rubber obtained. In view of the physical properties including cold resistance, the proportion of acrylic ester is preferable to be around 70 to 90 %. Moreover, the molecular weight is regulated by using polymerization degree regulators such as dodecylmercaptan, but the molecular weight of the copolymer is preferable to be not less than 0.1 in terms of intrinsic viscosity [$\eta$].

Similarly to the thermoplastic resins, it is preferable for these synthetic rubbers to contain one or more of nitrogen, oxygen and sulfur atoms and aromatic rings. Similarly, the amorphous synthetic rubbers have higher effect. However, the synthetic rubbers to be used in the invention are not confined to those described above.

Moreover, the condensed polycyclic compounds which may be used in the invention are condensed polycyclic hydrocarbons and condensed heterocyclic compounds constituted by not less than three rings. If being not less than three rings, any constitution may be employed without problems, but the higher the number of rings, the more preferable.

The ring assemblages which may be used in the invention consist of not less than three ring systems (single rings or condensed rings) directly linked through single bonds or double bonds, wherein the number of such direct ring linkages is less by 1 than the number of ring systems contained. The ring systems may be cyclic hydrocarbon systems or heterocyclic systems. Moreover, if being not less than three ring systems, any constitution may be employed without problems, but the higher the number of ring systems, the more preferable.

In these condensed polycyclic compounds and ring assemblages (hereinafter, referred to as cyclic substances collectively), functional groups such as alkyl groups with 1 to 4 carbon atoms, hydroxyl groups, oxo groups, carboxyl groups, amino groups, cyano groups, nitro groups and halogen groups may be linked to the rings. Moreover, since the cyclic substances are compounded with thermoplastic resin or synthetic rubber, it is required to bring them into sufficient dispersion state. For this reason, the melting point of the cyclic substances is desirable to be lower than the processing temperature of the thermoplastic resin or synthetic rubber. For example, as the condensed polycyclic compounds, acenaphthylene, acenaphthene, phenanthrene, 9-phenanthrole, fluorene, anthrone, 9-fluorenone, perhydrofluorene, benzophenanthrene, 9-anthracenemethanol, 9,10-dihydroanthracene, pyrene, 1,2-benzopyrene, dibenzophenanthrene, dibenzosuberane, terpenes with three or more rings, steroid, alkaloid, dibenzofuran, xanthene, 9-xanthenol, xanthone, acridine, dibenzothiophene, phenanthridine, 1,4-benzoquinone, 7,8-benzoquinoline, 1,10-phenanthroline, phenazine, phenoxazine and thianthrene can be mentioned. As the ring assemblages, 1,2-diphenylbenzene, 1,3-diphenylbenzene, 1,3,5-triphenylbenzene, 1,2,3,4-tetraphenyl-1,3-cyclopentadiene and 2,2:6',2''-terpyridine can be mentioned. Among such cyclic substances, one type or mixtures of two or more types are compounded with the thermoplastic resin or synthetic rubber.

As the addition level of cyclic substances, not less than 5 parts by weight to not more than 100 parts by weight, preferably not less than 15 parts by weight to not more than 50 parts by weight, to 100 parts by weight of thermoplastic resin or synthetic rubber are desirable in total from the points of processibility and economics.

To the thermoplastic resin composition according to the invention, pasticizers such as DOP and dioctyl sebacate (DOS), which are usually added to thermoplastic resin, inorganic fillers represented by calcium carbonate and talc, flame retardants represented by antimony trioxide and zinc borate, flaky fillers represented by mica and graphite, which are often used for the absorbers of vibration energy can be added to the extent that the performance is not extremely lowered, if need be.

Furthermore, the composition of the invention can be blended with cumarone resin or xylene resin which are often used for the absorbers of vibration energy. However, the boiling point of these additives must be lower than the processing temperature of the thermoplastic resin.

Moreover, the thermoplastic resin compositions according to the invention can be freely molded by processes such as calendering, extrusion, injection molding, foam molding and compression molding, which are conventional molding processes of thermoplastic resins, after blending the thermoplastic resin with condensed polycyclic compounds or ring assemblages in dry or blending in heat-molten state with rolls, extruder, or Banbury mixer .

The synthetic rubber compositions of the invention can be vulcanized using metal oxides represented by magnesium oxide and lead oxide, vulcanizing agents and vulcanizing auxiliaries such as sulfur and

vulcanization accelerators represented by dipentamethylenethiuram tetrasulfide, dibenzothiazyl disulfide, benzothiazol, thiuram, ureas and guanidines, which are used in conventional vulcanization processes. Hence, they can be freely molded by processes such as compression molding, injection molding, calendering and extrusion, which are conventional molding processes.

At this time, fillers such as carbon black, clay, silicate and barium sulfate can be added for the purpose of improved mechanical properties. Also, softeners such as process oil, cumarone resin and ester-based plasticizers can be added for the purpose of improved processibility. Further, petroleum resin and other polymers may be mixed for the purposes of improved processibility of mixtures and improved characteristics of vulcanizates. Moreover, the addition of age-resistor, scorch retarder, lubricant and adhesive, which are usually added to rubber, causes no problems.

The synthetic rubber compositions according to the invention can be used as molded articles having improved the absorption performance of vibration energy particularly in low-temperature region after vulcanized and molded as they are, and, in addition, it is also possible to impart the absorption performance of vibration energy in low-temperature region by blending them with other resins or rubbers.

The vibration energy absorbers obtainable according to the invention can be used for supporting members of instruments such as precision electronic instrument and precision measurement instrument, the accuracy of which is liable to be affected by vibration, vibrationproof materials of installations such as production line of electronic parts, the production process of which requires the accurary, fixing members of packing, gaskets, rolls or belts and laminating members of acoustic instruments. Moreover, they can also be used for the vibration-damping adhesives, further for suppressing the vibration by directly sticking them onto the positions of intense vibration of cars and industrial instruments and for compositing with other materials such as metallic materials of stainless steel plate and aluminum plate and woody and inorganic materials.

In the following, the invention will be illustrated using examples, but the invention is not confined by these examples.

Example 1

Hundred parts by weight of polystyrene (GP-1, made by Denki Kagaku Kogyo K.K.) as a styrene resin and 1 part by weight of Irganox 1010 (made by Chiba-Geigy (Japan) Ltd.) as an antioxidant were kneaded at 170 °C in molten state with Labo Plastomill (made by Toyo Seiki Co., Ltd.), and further, after adding 20 parts by weight of pyrene as a condensed polycyclic compound, the mixture was kneaded for 5 min to obtain an aimed composition.

Example 2

Except that 20 parts by weight of dibenzofuran were used in place of pyrene in Example 1, treatment was made by quite similar procedure to obtain an aimed composition.

Example 3

Except that 20 parts by weight of anthrone were used in place of pyrene in Example 1, treatment was made by quite similar procedure to obtain an aimed composition.

Example 4

Except that pyrene was used in amounts of 60 parts by weight in Example 1, treatment was made by quite similar procedure to obtain an aimed composition.

Example 5

Except that 100 parts by weight of styrene-butadiene-styrene block copolymer (Europrene SOL T162, made by EniChem Elastomers Ltd.) were used in place of polystyrene in Example 1, treatment was made by quite similar procedure to obtain an aimed composition.

Example 6

Except that 100 parts by weight of acrylonitrile-butadiene-styrene copolymer (Diapet ABS1001, made

by Mitsubishi Rayon Co., Ltd.) were used in place of polystyrene in Example 1, quite similar system was mixed and kneaded at 200 °C to obtain an aimed composition.

Example 7

Except that 20 parts by weight of dibenzofuran were used in place of pyrene in Example 5, treatment was made by quite similar procedure to obtain an aimed composition.

Example 8

Except that 20 parts by weight of dibenzofuran were used in place of pyrene in Example 6, treatment was made by quite similar procedure to obtain an aimed composition.

Comparative example 1

Except that 20 parts by weight of 2-methylnaphthalene were used in place of pyrene in Example 1, treatment was made by quite similar procedure to obtain an aimed composition.

Comparative example 2

Except that 20 parts by weight of 2-methylnaphthalene were used in place of pyrene in Example 5, treatment was made by quite similar procedure to obtain an aimed composition.

Example 9

Except that 20 parts by weight of 1,3-diphenylbenzene as a ring assemblage were used in place of pyrene in Example 1, treatment was made by quite similar procedure to obtain an aimed composition.

Example 10

Except that 20 parts by weight of 1,3,5-triphenylbenzene were used in place of pyrene in Example 1, treatment was made by quite similar procedure to obtain an aimed composition.

Example 11

Except that 20 parts by weight of 1,3-diphenylbenzene were used in place of pyrene in Example 6, treatment was made by quite similar procedure to obtain an aimed composition.

Comparative example 3

Except that 20 parts by weight of biphenyl comprising two rings were used in place of pyrene in Example 1, treatment was made by quite similar procedure to obtain an aimed composition.

Comparative example 4

Except that 20 parts by weight of p-hydroxybiphenyl were used in place of pyrene in Example 1, treatment was made by quite similar procedure to obtain an aimed composition.

Comparative example 5

Except that 20 parts by weight of p-hydroxybiphenyl were used in place of pyrene in Example 5, treatment was made by quite similar procedure to obtain an aimed composition.

Example 12

Hundred parts by weight of poly(phenylene sulfide) resin (Ryton P-4, made by Phillips Petroleum Co.) and 20 parts by weight of phenanthrene as a condensed polycyclic compound were kneaded for 5 min at 300 °C in molten state with Labo Plastomill (made by Toyo Seiki Co., Ltd.) to obtain an aimed composition.

Example 13

Sixty parts by weight of poly(phenylene sulfide) resin (Ryton P-4, made by Phillips Petroleum Co.), 40 parts by weight of glass fibers and 5 parts by weight of 1,4-diphenylbenzene as a ring assemblage were kneaded in molten state by similar procedure to Example 12 to obtain an aimed composition.

Example 14

Except that 25 parts by weight of anthraquinone were used in place of 5 parts by weight of 1,4-diphenylbenzene in Example 13, treatemnt was made by quite similar procedure to obtain an aimed composition.

Comparative example 6

Only poly(phenylene sulfide) resin used in Example 12 was kneaded in molten state by similar procedure to Example 12.

Comparative example 7

Only 60 Parts by weight of poly(phenylene sulfide) resin and 40 parts by weight of glass fibers used in Example 13 were kneaded in molten state by similar procedure to Example 13.

Example 15

Hundred parts by weight of poly(methyl methacrylate)(VS-100, made by Rohm & Haas Co.) as an acrylic resin and 20 parts by weight of pyrene as a condensed polycyclic compound were kneaded for 5 min at 180 °C in molten state with Labo Plastomill (made by Toyo Seiki Co., Ltd.) to obtain an aimed composition.

Example 16

Except that 20 parts by weight of 1,2-diphenylbenzene as a ring assemblage were used in place of pyrene in Example 15, treatment was made by quite similar procedure to obtain an aimed composition.

Example 17

Except that 20 parts by weight of 1,3-diphenylbenzene were used in place of 1,2-diphenylbenzene in Example 16, treatment was made by quite similar procedure to obtain an aimed composition.

Example 18

Hundred parts by weight of acrylic rubber (Nipol AR-31, made by Nippon Zeon Co., Ltd.), 1 part by weight of stearic acid, 1 part by weight of PZ as a vulcanizing agent, 0.5 parts by weight of TTFe, 50 parts by weight of carbon black and 10 parts by weight of phenanthrene as a condensed polycyclic compound were kneaded for 20 min with water-cooled rolls. The kneaded product thus obtained was vulcanized for 20 min under pressure with a press machine of temperature of 155 °C to obtain an aimed composition.

Comparative example 8

Only poly(methyl methacrylate) used in Example 15 was kneaded in molten state by similar procedure to Example 15 to obtain an aimed composition.

Comparative example 9

A system eliminated only condensed polycyclic compound from the formulation used in Example 18 was vulcanized by similar procedure to Example 18 to obtain an aimed composition.

Comparative example 10

Except that 20 parts by weight of 2-methylnaphthalene were used in place of pyrene in Example 15, treatment was made by quite similar procedure to obtain an aimed composition.

Comparative example 11

Except that 10 parts by weight of 2-methylnaphthalene were used in place of phenanthrene in Example 18, treatment was made by quite similar procedure to obtain an aimed composition.

Example 19

Hundred parts by weight of high-density polyethylene (Nipolon Hard 7300A, made by Tosoh Corp.) and 20 parts by weight of phenanthrene as a condensed polycyclic compound were kneaded for 5 min at 180 °C in molten state with Labo Plastomill (made by Toyo Seiki Co., Ltd.) to obtain an aimed composition.

Example 20

Except that 20 parts by weight of 1,3-diphenylbenzene as a ring assemblage were used in place of phenanthrene in Example 19, treatment was made by quite similar procedure to obtain an aimed composition.

Comparative example 12

Except that 20 parts by weight of 2-methylnaphthalene were used in place of phenanthrene in Example 19, treatment was made by quite similar procedure to obtain an aimed composition.

Comparative example 13

Except that 20 parts by weight of biphenyl were used in place of 1,3-diphenylbenzene in Example 20, treatment was made by quite similar procedure to obtain an aimed composition.

Example 21

Hundred parts by weight of polypropylene (J-7030B, made by Chisso Corp.) and 20 parts by weight of pyrene as a condensed polycyclic compound were kneaded for 5 min at 180 °C in molten state with Labo Plastomill (made by Toyo Seiki Co., Ltd.) to obtain an aimed composition.

Example 22

Except that 20 parts by weight of 1,3-diphenylbenzene as a ring assemblage were used in place of pyrene in Example 21, treatment was made by quite similar procedure to obtain an aimed composition.

Comparative example 14

Except that 20 parts by weight of 2-methylnaphthalene were used in place of pyrene in Example 21, treatment was made by quite similar procedure to obtain an aimed composition.

Comparative example 15

Except that 20 parts by weight of biphenyl were used in place of 1,3-diphenylbenzene in Example 22, treatment was made by quite similar procedure to obtain an aimed composition.

Example 23

Hundred parts by weight of ethylene-vinyl acetate copolymer (Ultracene 634, made by Tosoh Corp.) and 20 parts by weight of phenanthrene as a condensed polycyclic compound were kneaded for 5 min at 100 °C in molten state with Labo Plastomill (made by Toyo Seiki Co., Ltd.) to obtain an aimed composition.

Example 24

Except that 20 parts by weight of 1,3-diphenylbenzene as a ring assemblage were used in place of phenanthrene in Example 23, treatment was made by quite similar procedure to obtain an aimed composition.

Comparative example 16

Except that 20 parts by weight of 2-methylnaphthalene were used in place of phenanthrene in Example 23, treatment was made by quite similar procedure to obtain an aimed composition.

Comparative example 17

Except that 20 parts by weight of biphenyl were used in place of 1,3-diphenylbenzene in Example 24, treatment was made by quite similar procedure to obtain an aimed composition.

Example 25

Hundred parts by weight of polycarbonate (Panlite K-1300, made by Teijin Ltd.) and 20 parts by weight of pyrene as a condensed polycyclic compound were kneaded for 5 min at 280 °C in molten state with Labo Plastomill (made by Toyo Seiki Co., Ltd.) to obtain an aimed composition.

Comparative example 18

Except that 20 parts by weight of 2-methylnaphthalene were used in place of pyrene in Example 25, treatment was made by quite similar procedure to obtain an aimed composition.

Example 26

Hundred parts by weight of polyacetal (Duracon GC-25, made by Polyplastics KK.) were kneaded at 200 °C in molten state with Labo Plastomill (made by Toyo Seiki Co., Ltd.), and further, after added 20 parts by weight of pyrene as a condensed polycyclic compound, the mixture was kneaded for 5 min to obtain an aimed composition.

Example 27

Except that pyrene was used in amounts of 40 parts by weight in Example 26, treatment was made by quite similar procedure to obtain an aimed composition.

Example 28

Except that 20 parts by weight of 1,3-diphenylbenzene were used in place of pyrene in Example 26, treatment was made by quite similar procedure to obtain an aimed composition.

Comparative example 19

Only polyacetal used in Example 26 was kneaded in molten state by similar procedure.

Comparative example 20

Except that 20 parts by weight of biphenyl were used in place of pyrene in Example 26, treatment was made by quite similar procedure to obtain an aimed composition.

Example 29

Hundred parts by weight of polyarylate (U-100, made by Unitika Ltd.) and 20 parts by weight of decacyclene as a condensed polycyclic compound were kneaded for 5 min at 300 °C in molten state with Labo Plastomill (made by Toyo Seiki Co., Ltd.) to obtain an aimed composition.

Comparative example 21

Only polyarylate used in Example 29 was kneaded in molten state by similar procedure.

Example 30

Hundred parts by weight of thermoplastic polyurethane (Miractran 9X05, made by Nippon Miractran Ind. LTD.) and 10 parts by weight of pyrene as a condensed polycyclic compound were kneaded for 5 min at a temperature of 185 °C with rolls to obtain an aimed composition.

Example 31

Except that 10 parts by weight of 1,3-diphenylbenzene were used in place of pyrene in Example 30, quite similar systems was mixed and kneaded for 5 min at a temperature of 185 °C to obtain an aimed composition.

Example 32

Except that pyrene was used in amounts of 25 parts by weight in Example 30, treatment was made by quite similar procedure to obtain an aimed composition.

Comparative example 22

Only thermoplastic polyurethane used in Example 30 was kneaded for 5 min at a temperature of 185 °C with rolls.

Comparative example 23

Except that 10 parts by weight of 2-methylnaphthalene were used in place of pyrene in Example 30, treatment was made by quite similar procedure to obtain an aimed composition.

Comparative example 24

Except that 10 parts by weight of biphenyl being a ring assemblage comprising two rings were used in place of pyrene in Example 30, treatment was made by quite similar procedure to obtain an aimed composition.

Example 33

Hundred parts by weight of modified poly(phenylene oxide) (Noryl SEI-GFN3, made by General Electrics Co.) and 20 parts by weight of pyrene as a condensed polycyclic compound were kneaded for 5 min at 300 °C with Labo Plastomill (made by Toyo Seiki Co., Ltd.) to obtain an aimed composition.

Example 34

Except that 20 parts by weight of 1,4-diphenylbenzene as a ring assemblage were used in place of pyrene in Example 33, treatment was made by quite similar procedure to obtain an aimed composition.

Comparative example 25

Only modified poly(phenylene oxide) used in Example 33 was kneaded in molten state by similar procedure.

Comparative example 26

Except that 20 parts by weight of p-hydroxybiphenyl were used in place of pyrene in Example 33, treatment was made by quite similar procedure to obtain an aimed composition.

Example 35

Hundred parts by weight of poly(ethylene terephthalate) (ESMO #5000, made by Kuraray Co., Ltd.) as a thermoplastic polyester and 20 parts by weight of pyrene as a condensed polycyclic compound were kneaded for 10 min at 240 °C with Labo Plastomill (made by Toyo Seiki Co., Ltd.) to obtain an aimed composition.

Example 36

Except that 100 parts by weight of poly(butylene terephthalate) (Tufpet PBT N1000, made by Mitsubishi Rayon Co., Ltd) were used in place of poly(ethylene terephthalate) in Example 35, treatment was made by quite similar procedure to obtain an aimed composition.

Comparative example 27

Only poly(ethylene terephthalate) used in Example 35 was kneaded in molten state by similar procedure.

Comparative example 28

Only poly(butylene terephthalate) used in Example 36 was kneaded in molten state by similar procedure.

Comparative example 29

Except that 20 parts by weight of p-hydroxybiphenyl were used in place of pyrene in Example 35, treatment was made by quite similar procedure to obtain an aimed composition.

Comparative example 30

Except that 20 parts by weight of p-hydroxybiphenyl were used in place of pyrene in Example 36, treatment was made by quite similar procedure to obtain an aimed composition.

Example 37

Hundred parts by weight of Nylon 12 (Rilsan AMNO, made by Atochem Co.) and 20 parts by weight of pyrene as a condensed polycyclic compound were kneaded for 10 min at 200 °C with Labo Plastomill (made by Toyo Seiki Co., Ltd.) to obtain an aimed composition.

Example 38

Except that 20 parts by weight of 1,3-diphenylbenzene as a ring assemblage were used in place of pyrene in Example 37, treatment was made by quite similar procedure to obtain an aimed composition.

Comparative example 31

Only Nylon 12 used in Example 37 was kneaded in molten state by similar procedure.

Comparative example 32

Except that 20 parts by weight of 2-methylnaphthalene were used in place of pyrene and the temperature was changed to 180 °C, treatment was made by quite similar procedure to obtain an aimed composition.

Example 39

Hundred parts by weight of butadiene-acrylonitrile copolymer with an acrylonitrile content of 33 % (Europrene N33.66, made by EniChem Elastomers Ltd.) as a nitrile rubber, 1.5 parts by weight of sulfur as a crosslinking agent, 3 parts by weight of zinc oxide as a vulcanization auxiliary, 0.7 parts by weight of zinc dimethyldithiocarbamate (Nocceler PZ, made by Ouchi Shinko Kagaku Kogyo Co., Ltd.) as a vulcanization

accelerator, further 1 part by weight of stearic acid, 50 parts by weight of carbon black and 10 parts by weight of phenanthrene as a condensed polycyclic compound were kneaded for 20 min with water-cooled rolls to obtain an aimed composition.

Example 40

Except that 10 parts by weight of pyrene were used in place of phenanthrene in Example 39, treatment was made by quite similar procedure to obtain an aimed composition.

Example 41

Except that 10 parts by weight of 1,2-diphenylbenzene as a ring assemblage were used in place of phenanthrene in Example 39, treatment was made by quite similar procedure to obtain an aimed composition.

Example 42

Except that 10 parts by weight of 1,3-diphenylbenzene as a ring assemblage were used in place of phenanthrene in Example 39, treatment was made by quite similar procedure to obtain an aimed composition.

Example 43

Except that phenanthrene was used in amounts of 30 parts by weight in Example 39, treatment was made by quite similar procedure to obtain an aimed composition.

Comparative example 33

A system eliminated only condensed polycyclic compound from the formulation used in Example 39 was treated by similar procedure to Example 39 to obtain an aimed composition.

Comparative example 34

Except that 10 parts by weight of 2-methylnaphthalene were used in place of phenanthrene in Example 39, treatment was made by quite similar procedure to obtain an aimed composition.

Comparative example 35

Except that 10 parts by weight of biphenyl were used in place of phenanthrene in Example 39, treatment was made by quite similar procedure to obtain an aimed composition.

Example 44

Hundred parts by weight of chloroprene rubber (Skyprene B-30, $ML_{1+4}$(100 °C) = 48, made by Tosoh Corp.) 4 parts by weight of magnesium oxide and 5 parts by weight of zinc oxide as vulcanizing agents, 0.35 parts by weight of 2-mercaptobenzimidazole (Nocceler MB, made by Ouchi Shinko Kagaku Kogyo Co., Ltd.) as a vulcanization accelerator, 20 parts by weight of carbon black and 10 parts by weight of phenanthrene as a condensed polycyclic compound were kneaded for 20 min with water-cooled rolls to obtain an aimed composition.

Example 45

Except that phenanthrene was used in amounts of 40 parts by weight in Example 44, treatment was made by quite similar procedure to obtain an aimed composition.

Example 46

Except that 10 parts by weight of pyrene were used in place of phenanthrene in Example 44, treatment

was made by quite similar procedure to obtain an aimed composition.

Example 47

Except that 10 parts by weight of 1,2-diphenylbenzene as a ring assemblage were used in place of phenanthrene in Example 44, treatment was made by quite similar procedure to obtain an aimed composition.

Example 48

Except that 10 parts by weight of 1,3-diphenylbenzene as a ring assemblage were used in place of phenanthrene in Example 44, treatment was made by quite similar procedure to obtain an aimed composition.

Comparative example 36

A system eliminated only condensed polycyclic compound from the formulation used in Example 44 was treated by similar procedure to Example 44 to obtain an aimed composition.

Comparative example 37

Except that 10 parts by weight of 2-methylnaphthalene were used in place of phenanthrene in Example 44, treatment was made by quite similar procedure to obtain an aimed composition.

Comparative example 38

Except that 10 parts by weight of biphenyl were used in place of phenanthrene in Example 44, treatment was made by quite similar procedure to obtain an aimed composition.

Example 49

Hundred parts by weight of chlorosulfonated polyethylene (Toso-CSM TS-530, $ML_{1+4}$(100 °C) = 56, made by Tosoh Corp.), 10 parts by weight of magnesium oxide as a vulcanizing agent, 2 parts by weight of dipentamethylene thiuram tetrasulfide (Nocceler TRA, made by Ouchi Shinko Kagaku Kogyo Co., Ltd.) and 1 part by weight of dibenzothiazyl disulfide (Nocceler DM, made by Ouchi Shinko Kagaku Kogyo Co., Ltd.) as vulcanization accelerators and 10 parts by weight of phenanthrene as a condensed polycyclic compound were kneaded for 15 min with water-cooled rolls to obtain an aimed composition.

Example 50

Except that phenanthrene was used in amounts of 40 parts by weight in Example 49, treatment was made by quite similar procedure to obtain an aimed composition.

Example 51

Except that 10 parts by weight of pyrene were used in place of phenanthrene in Example 49, treatment was made by quite similar procedure to obtain an aimed composition.

Example 52

Except that 10 parts by weight of 1,2-diphenylbenzene as a ring assemblage were used in place of phenanthrene in Example 49, treatment was made byquite similar procedure to obtain an aimed composition.

Comparative example 39

A system eliminated only condensed polycyclic compound from the formulation used in Example 49 was treated by similar procedure to Example 49 to obtain an aimed composition.

Comparative example 40

Except that 10 parts by weight of 2-methylnaphthalene were used in place of phenanthrene in Example 49, treatment was made by quite similar procedure to obtain an aimed composition.

Comparative example 41

Except that 10 parts by weight of biphenyl were used in place of phenanthrene in Example 49, treatment was made by quite similar procedure to obtain an aimed composition.

[Evaluation of loss factor (tan $\delta$)]

The thermoplastic resin compositions obtained in Example 1 through 38 and Comparative example 1 through 32 were heated under pressure respectively with a press machine, the temperature of which had been set to that on kneading in molten state, under the conditions of 10 min and 100 kgf/cm$^2$ to prepare 1 mm thick sheets. Besides, the compositions in Comparative example 29 and 30 were so brittle that they could not be processed to sheets.

On the other hand, the synthetic rubber compositions obtained in Example 39 through 52 and Comparative example 33 through 41 were vulcanized under pressure with a press machine of temperature of 150 to 180 °C under the conditions of 5 to 30 min and 100 kgf/cm$^2$ to prepare about 200 $\mu$m thick sheets.

Using these sheets, the loss factor was measured with Viscoelasticity Analyzer RSA II (made by Rheometrics FarEast Co.) being a measurement device based on the nonresonance type forced vibration method at a temperature-raising velocity of 2 °C/min and measurement frequency of 10 Hz. The loss factors and the temperatures at this time are shown in Table 1 through 16.

Besides, in Table 1, the measured values for sole products of polystyrene (Referential example 1), styrene-butadiene-styrene block copolymer (Referential example 2) and acrylonitrile-butadiene-styrene copolymer (Referential example 3) used in examples were put down as referential examples.

Table 1

| | | Peak value of loss factor | Peak temperature (°C) |
|---|---|---|---|
| Example | 1 | 2.36 | 86 |
| | 2 | 2.1 | 85 |
| | 3 | 2.05 | 85 |
| | 4 | 2.6 | 53 |
| | 5 | 1.2 | 64 |
| | 6 | 1.3 | 114 |
| | 7 | 1.05 | 65 |
| | 8 | 1.25 | 112 |
| | 9 | 1.9 | 75 |
| | 10 | 2.0 | 73 |
| | 11 | 1.2 | 85 |
| Comparative example | 1 | 1.5 | 102 |
| | 2 | 0.65 | 90 |
| | 3 | 1.5 | 105 |
| | 4 | 1.4 | 95 |
| | 5 | 0.6 | 91 |
| Referential example | 1 | 1.65 | 110 |
| | 2 | 0.76 | 95 |
| | 3 | 1.1 | 120 |

Table 2

| | | Temperature range having tan δ ≧ 0.01 (Up to 150 °C) |
|---|---|---|
| Example | 12 | -35 °C - 150 °C |
| | 13 | 15 °C - 150 °C |
| | 14 | 5 °C - 150 °C |
| Comparative example | 6 | 87 °C - 150 °C |
| | 7 | 76 °C - 150 °C |

Table 3

| | | Peak value of loss factor | Peak temperature |
|---|---|---|---|
| Example | 15 | 1.2 | 86 (°C) |
| | 16 | 1.3 | 88 |
| | 17 | 1.15 | 84 |
| | 18 | 1.0 | -1 |
| Comparative example | 8 | 0.9 | 111 |
| | 9 | 0.8 | 1 |
| | 10 | 0.65 | 102 |
| | 11 | 0.65 | 0 |

Table 4

| | | Temperature range having tan δ ≧ 0.02 (Up to 100 °C) |
|---|---|---|
| Example | 19 | over -73 °C |
| | 20 | over -65 °C |
| Comparative example | 12 | over -47 °C |
| | 13 | over -40 °C |

Table 5

| | | Temperature range having tan δ ≧ 0.04 (Up to 100 °C) |
|---|---|---|
| Example | 21 | over -25 °C |
| | 22 | over -35 °C |
| Comparative example | 14 | -20 °C - 25 °C, over 40 °C |
| | 15 | over -18 °C |

Table 6

| | | Temperature range having tan δ ≧ 0.1 (Up to 80 °C) |
|---|---|---|
| Example | 23 | over -40 °C |
| | 24 | over -40 °C |
| Comparative example | 16 | -34 - 26 °C, over 62 °C |
| | 17 | -32 - 28 °C, over 60 °C |

Table 7

| | | Peak value of loss factor | Peak temperature |
|---|---|---|---|
| Example | 25 | 1.0 | 102 °C |
| Comparative example | 18 | 0.43 | 95 °C |

Table 8

| | | Value of loss factor | | |
|---|---|---|---|---|
| | | 25 °C | 50 °C | 100 °C |
| Example | 26 | 0.03 | 0.04 | 0.07 |
| | 27 | 0.05 | 0.07 | 0.09 |
| | 28 | 0.04 | 0.05 | 0.08 |
| Comparative example | 19 | 0.02 | 0.03 | 0.04 |
| | 20 | 0.02 | 0.03 | 0.05 |

Table 9

| | | Peak value of loss factor | Peak temperature |
|---|---|---|---|
| Example | 29 | 1.35 | 189 °C |
| Comparative example | 21 | 0.46 | 220 °C |

Table 10

| | | Peak value of loss factor | Peak temperature (°C) |
|---|---|---|---|
| Example | 30 | 0.67 | -4 |
| | 31 | 0.67 | -10 |
| | 32 | 0.78 | -6 |
| Comparative example | 22 | 0.53 | -2 |
| | 23 | 0.53 | -4 |
| | 24 | 0.54 | -4 |

Table 11

| | | Peak value of loss factor | Peak temperature (°C) |
|---|---|---|---|
| Example | 33 | 1.22 | 119 |
| | 34 | 1.18 | 142 |
| Comparative example | 25 | 1.05 | 168 |
| | 26 | 0.98 | 120 |

Table 12

| | | Temperature range having tan δ ≧ 0.05 (Up to 150 °C) |
|---|---|---|
| Example | 35 | 2 - 100 °C |
| | 36 | 10 - 75 °C |
| Comparative example | 27 | 35 - 110 °C |
| | 28 | 38 - 72 °C |
| | 29 | impossible to measure |
| | 30 | impossible to measure |

Table 13

| | | Peak value of loss factor (Temp.) | Temperature range having tan δ ≧ 0.1 |
|---|---|---|---|
| Example | 37 | 0.17 (5 °C) | -5 - 25 °C |
| | 38 | 0.20 (0 °C) | -20 - 25 °C |
| Comparative example | 31 | 0.12 (10 °C) | 0 - 30 °C |
| | 32 | 0.07 (2 °C) | none |

Table 14

| | | Peak value of loss factor | Peak temperature (°C) |
|---|---|---|---|
| Example | 39 | 2.3 | -4 |
| | 40 | 2.45 | -3 |
| | 41 | 2.4 | -4 |
| | 42 | 2.55 | -3 |
| | 43 | 2.65 | -3 |
| Comparative example | 33 | 2.1 | -3 |
| | 34 | 1.9 | -4 |
| | 35 | 2.0 | -7 |

Table 15

| | | Peak value of loss factor | Peak temperature (°C) |
|---|---|---|---|
| Example | 44 | 2.3 | -30 |
| | 45 | 2.9 | -28 |
| | 46 | 2.5 | -29 |
| | 47 | 2.3 | -26 |
| | 48 | 2.4 | -25 |
| Comparative example | 36 | 1.6 | -30 |
| | 37 | 0.9 | -29 |
| | 38 | 0.9 | -28 |

Table 16

| | | Peak value of loss factor | Peak temperature |
|---|---|---|---|
| Example | 49 | 1.61 | -3 |
| | 50 | 2.05 | -5 |
| | 51 | 1.84 | -6 |
| | 52 | 1.84 | -8 |
| Comparative example | 39 | 1.52 | -6 |
| | 40 | 0.97 | -9 |
| | 41 | 0.87 | -10 |

As evident from the explanation above, in accordance with the invention, an absorber of vibration energy having high loss factor can be obtained by compounding thermoplastic resin or synthetic rubber with condensed polycyclic compound consisting of not less than three rings and/or ring assemblage consisting of not less than three ring systems in a specified proportion.

## Claims

1. A thermoplastic resin composition containing 5 to 100 parts by weight of at least one condensed polycyclic compound consisting of not less than three rings and/or of at least one ring assemblage consisting of not less than three ring systems per 100 parts by weight of thermoplastic resin.

2. The thermoplastic resin composition of claim 1, wherein the thermoplastic resin is a thermoplastic resin other than a poly(vinyl chloride)-based resin.

3. The thermoplastic resin composition of claim 1, wherein the thermoplastic resin contains one or more of nitrogen, oxygen and sulfur atoms and aromatic rings.

4. The thermoplastic resin composition of claim 1, wherein the thermoplastic resin is a styrenic resin.

5. The thermoplastic resin composition of claim 1, wherein the thermoplastic resin is a poly(arylene sulfide) resin.

6. The thermoplastic resin composition of claim 1, wherein the thermoplastic resin is an acrylic resin.

7. The thermoplastic resin composition of claim 1, wherein the thermoplastic resin is a polyolefin.

8. The thermoplastic resin composition of claim 1, wherein the thermoplastic resin is a polycarbonate.

9. The thermoplastic resin composition of claim 1, wherein the thermoplastic resin is a polyacetal.

**10.** The thermoplastic resin composition of claim 1, wherein the thermoplastic resin is a polyurethane.

**11.** The thermoplastic resin composition of claim 1, wherein the thermoplastic resin is a modified poly-(phenylene oxide).

**12.** The thermoplastic resin composition of claim 1, wherein the thermoplastic resin is a thermoplastic polyester.

**13.** The thermoplastic resin composition of claim 1, wherein the thermoplastic resin is a polyamide.

**14.** A synthetic rubber composition containing 5 to 100 parts by weight of at least one condensed polycyclic compound consisting of not less than three rings and/or of at least one ring assemblage consisting of not less than three ring system per 100 parts by weight of synthetic rubber.

**15.** The synthetic rubber composition of claim 14, wherein the synthetic rubber is a nitrile rubber.

**16.** The synthetic rubber composition of claim 14, wherein the synthetic rubber is a chloroprene rubber.

**17.** The synthetic rubber composition of claim 14, wherein the synthetic rubber is a chlorosulfonated polyethylene.

**18.** An absorber of vibration energy comprising the thermoplastic resin composition of any one of claims 1 to 13.

**19.** An absorber of vibration energy comprising the synthetic rubber composition of any one of claims 14 to 17.